# EUROPEAN PATENT APPLICATION

(11) **EP 4 503 661 A1**
(43) Date of publication of application: **05.02.2025**
(21) Application number: 23188746.4
(22) Date of filing: 31.07.2023
(51) Int. Cl.: H04W 4/029, B60W 60/00, G01C 21/34, G06Q 50/30, G08G 1/00, H04L 67/12, H04W 4/44, G06Q 10/047, G06Q 10/0631

(54) **CELLULAR NETWORK FOR CONTROLLING A VEHICLE FLEET**

(71) Applicant: Deutsche Telekom AG, 53113 Bonn (DE)
(72) Inventor: GEITZ, Marc, 58089 Hagen (DE); SCHNIEDERS, Dominik, 52078 Aachen (DE)
(74) Representative: RDL Patentanwälte PartG mbB

(57) **Abstract**

A method for operating a fleet of vehicles, wherein a vehicle of a fleet of vehicles to be randomly accessed and operated on a road network by a plurality of customers is arranged at a first waiting point of the road network, the road network comprising a plurality of waiting points for the vehicle and a plularity of roads each road connecting exactly two waiting points of the road network; and a distributed teleoperation application connects to the vehicle via a wireless connection and remotely operates the vehicle to move within the road network on a determined route from the first waiting point to a determined second waiting point, the wireless connection having a low latency and a low jitter and being provided by a cellular network covering the road network; a cellular network for controlling a vehicle fleet and a computer program product.

## Description

The invention relates to a method for operating a fleet of vehicles, wherein a vehicle of a fleet of vehicles to be randomly accessed and operated on a road network by a plurality of customers is located at a first waiting point of the road network, the road network comprising a plurality of waiting points for the vehicle and a plurality of roads each road connecting exactly two waiting points of the road network; and a distributed teleoperation application connects to the vehicle via a wireless connection and remotely operates the vehicle to move within the road network on a determined route from the first waiting point to a determined second waiting point, the wireless connection having a low latency and a low jitter and being provided by a cellular network covering the road network. The invention further relates to a cellular network for controlling a fleet of vehicles and a computer program product.

The fleet of vehicles, vehicle fleet for short, is provided by a vehicle fleet operator and comprises a plurality of vehicles provided to be operated individually by the customers, i.e. to be used for driving on individual routes along the roads of the road network. Each vehicle not currently operated by a customer may be located at a waiting point of the road network waiting for a customer or remotely driven by the fleet operator within the road network using the distributed teleoperation application.

The distributed teleoperation application is a real-time application or near real-time application and requires a low latency and a low jitter for a proper and safe execution. The latency is a transmission delay caused by the cellular network, i.e., a network delay. The latency essentially results from queuing data packets at cellular network nodes. The jitter is a variation of the latency over time and in many cases results from queue lengths varying over time or even temporary congestions of queues, i.e., a local overload of the cellular network. The lower the jitter the more stable the latency is.

The distributed teleoperation application, above all, requires a coverage provided by the cellular network. Portions of the road network not covered by the cellular network have to be considered no-go portions as vehicles of the fleet can only be remotely driven using a wireless connection provided by the cellular network. Portions of the road network weakly covered by the cellular network should possibly avoided as vehicles of the fleet might suffer from bad wireless connections resulting in the vehicles driving slowly, even stopping, and/or detouring.

The attribute "low" is specified by the distributed teleoperation application as a maximum latency and a maximum jitter, respectively, allowing for the proper execution of the distributed teleoperation application, i.e. any latency and jitter, respectively, lower than the specified maximum latency and the maximum jitter, respectively, is considered low herein.

However, a distribution of waiting vehicles over the road network may readily deviate from a distribution of the customers over the road network and/or contravene an availability of the cellular network over the road network. The former adversely affects a performance of the fleet of vehicles and, hence, an acceptance of the customers while the latter impedes the fleet operator in remotely driving vehicles not currently operated by a customer.

It is, therefore, an object of the invention to suggest a method for operating a fleet of vehicles, which allows a distribution of waiting vehicles both to meet the distribution of customers over the road network and to take into account the availability of the cellular network over the road network. Further objects of the inventions are to provide a cellular network and a computer program product.

One aspect of the invention is a method for operating a fleet of vehicles, wherein a vehicle of a fleet of vehicles to be randomly accessed and operated on a road network by a plurality of customers is located at a first waiting point of the road network, the road network comprising a plurality of waiting points for the vehicle and a plurality of roads each road connecting exactly two waiting points of the road network; and a distributed teleoperation application connects to the vehicle via a wireless connection and remotely operates the vehicle to move within the road network on a determined route from the first waiting point to a determined second waiting point, the wireless connection having a low latency and a low jitter and being provided by a cellular network covering the road network. The road network comprises a plurality of waiting points each waiting point being arranged at a roadside of a road, particularly at a road crossing. The determined route is a defined sequence of connected roads to be passed on the way from the first waiting point to the second waiting point.

There generally is a plurality of different routes connecting the determined second waiting point to the first waiting point. Determining the route comprises choosing the route from the plurality of possible routes. Correspondingly, determining the second waiting point comprises choosing the second waiting point from the plurality of waiting points. The vehicle may be moved to the second waiting point in order to change a distribution of the vehicles over the road network.

The second waiting point may be particularly determined to be the first waiting point which, of course, may result in the determined route to not comprise any road, i.e. to be a null route, and, hence, the vehicle not to be operated at all.

The first waiting point and the second waiting point may be any pair of waiting points of the road network. Each waiting point may be configured to be a single parking lot at a roadside or a parking lot of a parking area accessible from a road and possibly accommodating a plurality of waiting vehicles. The waiting points may be understood similar to traditional taxi areas wherein the vehicle differs from a traditional taxi in being remotely operable by a fleet operator instead of being driven by a driver arranged within the vehicle. The fleet operator, thus, may readily replace a plurality of traditional drivers resulting in a high economic efficiency of the vehicle fleet.

The cellular network may be a single cellular network provided by a single mobile network operator, MNO, or two or more cellular networks provided by two or more different mobile network operators. In the latter case, a low availability of a first cellular network in a portion of the road network may be compensated by a second cellular network with a higher availability in said portion. The low latency and the low jitter of the wireless connection allow for a safe remote operation of the vehicle when moving from the first waiting point to the second waiting point.

According to the invention, a fleet control node of the cellular network determines the second waiting point dependent on a distance of the vehicle from neighboring vehicles of the fleet of vehicles, a predicted distribution of the customers over the road network and a predicted bitrate and/or coverage provided by the cellular network at the determined second waiting point. The fleet control node is a node of the cellular network and supports the fleet operator in remotely operating the vehicle not currently used by a customer. The dependency of the distance allows for an even distribution of the vehicles over the road network. The dependency of the predicted distribution allows for anticipatorily meeting an expected distribution of the customers, i.e. a future demand for vehicles. The dependency of the predicted bitrate and/or coverage supports a reliable operation of the vehicle leaving the second waiting point later on after having been waiting at the second waiting point.

The even distribution of the vehicles avoids an accidental concentration of waiting vehicles in a portion of the road network. The dependency of the predicted distribution of customers allows for avoiding an unnecessary shortage of waiting vehicles, the shortage resulting from a variable demand for vehicles over time. The dependency of the predicted bitrate and/or coverage allows for avoiding a limitation in remotely operating the vehicles due to a variable availability of spectral resources provided by the cellular network over time, e.g., due to a varying load of the cellular network. The bitrate is directly related to a resolution and/or a frame rate of a video stream transmitted from the vehicle to the fleet operator, the video stream being provided by an environmental camera of the vehicle and showing a traffic situation of the vehicle.

It is noted that only the mobile network operator has detailed information concerning current and future bitrates of the wireless connection and/or a coverage of the cellular network. As the fleet control node requires said information the fleet control node is best configured to be a node of the cellular network.

It is further noted that requiring a low latency and a low jitter as a prerequisite also substantially simplifies the determination of the second waiting point and the route to the second waiting point as neither the latency nor the jitter are variables of the determination and, hence, none is subject to an optimization. Apart from that, the bitrate of the wireless connection as a variable of the determination is easier to measure and to handle than the latency or the jitter.

The indicated criteria allow for the fleet operator to distribute the waiting vehicles both meeting the distribution of customers over the road network and taking into account the availability of the cellular network over the road network. In other words, waiting vehicles may be located appropriately both meeting the demand for vehicles and benefiting from an unlimited operation of the vehicles at any time.

Preferably, the fleet control node determines a moving priority for the vehicle dependent on a difference between a current distribution of the vehicles at the waiting points, the current distribution comprising the vehicle located at the first waiting point, and a target distribution of the vehicles at the waiting points, the target distribution comprising the vehicle located at the second waiting point, and remotely operates the vehicle corresponding to the determined moving priority. The moving priority is determined for each vehicle of the fleet of vehicles and, hence, implies an order of operation of the vehicles of the vehicle fleet. The determined moving priority allows the fleet operator for remotely operate the vehicles of the vehicle fleet according to a respective contribution in reducing the difference. In other words, the more a vehicle reduces the difference the earlier the vehicle is remotely operated by the fleet operator. Each of the current distribution and the target distribution may take into account vehicles not located at any waiting point, but currently operated by customers. Customers also change the distribution of the vehicles over the road network by operating the vehicles.

The fleet control node advantageously determines the route from the first waiting point to the determined second waiting point dependent on a current bitrate and/or a current coverage provided by the cellular network along the determined route, and the vehicle is remotely operated to move along the determined route. The vehicle is required to be remotely operable along the route from the first waiting point to the second waiting point. Accordingly, a route at least temporarily having a critically low bitrate of the wireless connection and/or a critically weak coverage of the cellular network is excluded from being chosen.

The vehicle may execute a frontend of the distributed teleoperation application and an edge cloud server may execute a backend of the distributed teleoperation application. The edge cloud server is arranged close to the road network and, thus, allows for short transmission times. The close arrangement of the edge cloud server is understood spatially and/or logically wherein logically close indicates few hops between the frontend and the backend of the distributed teleoperation application.

A base transceiver station of the cellular network may provide the wireless connection with the low latency and the low jitter by prioritizing data packets transmitted by the distributed teleoperation application or by marking data packets transmitted by the distributed teleoperation application, the marked data packets causing the distributed teleoperation application to adapt a data rate of the transmitted data packets. In other words, the base transceiver station cooperates with the distributed teleoperation application in order to achieve the low latency and the low jitter. The cooperation, for instance, may be based on low latency low loss scalable throughput, L4S.

In a preferred embodiment, determining the second waiting point comprises annealing a cost function. The cost function is defined to have a minimum where a distribution of waiting vehicles over the road network both meets a distribution of the customers over the road network and benefits from sufficient radio conditions at the waiting points and on routes within the road network.

Annealing is an iterative process. Annealing the cost function comprises generating different distributions of the vehicles, e.g. by means of a Monte Carlo algorithm, and comparing the generated different distributions of the vehicles wherein a probability of a transition between the different distributions is given by a Boltzmann distribution dependent on a temperature. A distribution with the vehicle located at the first waiting point is different from a distribution with the vehicle located at the second waiting point. Distributions are even more different when a plurality of vehicles has moved from respective first waiting points to respective second waiting points.

The cost function may depend on time. The time dependence of the cost function reflects customer distributions and radio conditions changing over time.

The temperature is iteratively decreased during the annealing process, i.e. with each iteration, allowing larger transitions at the beginning of the annealing process and forcing smaller transitions at the end of the annealing process. While the cost function may have a plurality of minimums comprising at least one absolute, i.e. global, minimum the decreasing temperature of the Boltzmann distribution allows for finding, with a high probability, an absolute minimum of the cost function or at least an adequate local minimum of the cost function, the adequate local minimum being close to the absolute minimum.

A function comprising a negative term linearly dependent on the distance and a positive term inversely dependent on the distance may be annealed as the cost function. The negative term corresponds to a virtual attraction between the vehicles and prevents the vehicles from having large distances from each other. The positive term corresponds to a virtual repulsion between the vehicles and prevents the vehicles from having small distances from each other. In combination, the negative term and the positive term define an adequate distance from each other causing the vehicles to be evenly distributed over the road network when being the only terms of the cost function.

The function comprising a positive term having an inverse power of the bitrate and/or a positive term having an inverse power of the coverage may be annealed as the cost function. The first positive term corresponds to a virtual repulsion from portions of the road network where the cellular network provides low bitrates. The second positive term corresponds to virtual repulsion from portions of the road network which are not or weakly covered by the cellular network. Each positive term prevents the vehicles from being moved to or within portions of the road network having an insufficient support of the cellular network for a remote operation when being the only terms of the cost function.

The function comprising a negative term modeling the predicted distribution of the customers within the road network as a Gaussian distribution may be annealed as the cost function. The negative term corresponds to a virtual attraction caused by the customers distributed over the road network. The negative term causes the vehicles to move to the customers when being the only term of the cost function.

It is noted that each term comprises a positive coefficient, i.e. a factor, which particularly is dependent on time. Additionally, each term having a power comprises a positive exponent. Both the coefficients and the exponents are parameters of a model fitting the road network, the customers and the vehicle fleet.

The function may comprise a mathematical graph corresponding to the road network, the nodes of the mathematical graph being the waiting points of the road network and the edges of the graph being the roads of the road network connecting the waiting points. A domain of the function is a discrete grid. The function is evaluated at the nodes and along the edges only. The values of the positive and negative terms set forth above are relevant only at the nodes and along the edges of the mathematical graph. Accordingly, the values may be considered to be node attributes and edge attributes, respectively.

The distributed teleoperation application preferably operates each vehicle of the fleet of vehicles and the fleet control node preferably determines a second waiting point for each vehicle. Both the distributed teleoperation application and the fleet control node handle the complete fleet of vehicles. Determination of the second waiting point and the route from the first waiting point to the second waiting point may occur repeatedly, periodically in particular.

The fleet control node may additionally determine a route of the vehicle from the determined second waiting point to a destination determined by a customer using the vehicle and transmits the determined route to the vehicle. The fleet control node, in other words, determines a custom route. The fleet control node may transmit the determined route to a navigation system of the vehicle. It is noted that determining the custom route does not require annealing of the cost function as the vehicle is operated by the customer, i.e. not remotely, while traveling on the determined route. The destination determined by the customer, of course, also changes a distribution of the vehicles over the road network and, hence, affects the predicted distribution of the vehicles.

The fleet control node may further determine a route of the vehicle from the determined second waiting point to a customer located within the road network and having ordered the vehicle and the distributed teleoperation application remotely operates the vehicle to move from the determined second waiting point to the customer. The ordered vehicle moves from the second waiting point to the customer and, thus, relieves the customer from moving to the second waiting point and picking up the vehicle at the waiting point. Determining the route benefits from annealing the cost function as the vehicle is operated remotely while traveling on the determined route.

The fleet control node may, in an embodiment, comprise an artificial neural network for determining second waiting points and routes of the vehicles of the fleet being driven remotely.

Preferably, the cellular network provides the fleet control node as a permanent service. The service may be booked fee-based by a fleet operator with a mobile network operator providing the cellular network.

Another aspect of the invention is a cellular network for controlling a fleet of vehicles. The cellular network reliably provides wireless connections within a road network with a low latency and a low jitter.

According to the invention, the cellular network comprises a fleet control node, the fleet control node being configured for carrying out a method according to an embodiment of the invention together with a distributed teleoperation application and a vehicle of a fleet of vehicles. The cellular network allows the fleet of vehicles both to meet the distribution of customers over the road network and to take into account the availability of the cellular network over the road network resulting in a high performance of the vehicle fleet.

A third aspect of the invention is a computer program product, comprising a digital storage medium storing a program code. The digital storage medium may be configured as a compact disc, CD, a digital versatile disk, DVD, a universal serial bus, USB, stick, a random access memory, RAM, chip, a hard drive, HD, a cloud storage and the like.

According to the invention, the program code causes a computing device to carry out a method according to an embodiment of the invention as a fleet control node of a cellular network together with a distributed teleoperation application and a vehicle of a fleet of vehicles when being executed by a processor of the computing device. The program code configures the computing device to be a fleet control node of the cellular network.

It is an essential advantage of the inventive method that a distribution of waiting vehicles of a vehicle fleet both meets the distribution of customers over the road network and takes into account the availability of the cellular network over the road network, i.e, spectral resources provided by the cellular network. As a consequence, a performance of the vehicle fleet is high resulting in a high acceptance and a high satisfaction of customers of the vehicle fleet.

It shall be understood that the features described previously and to be described subsequently may be used not only in the indicated combinations but also in different combinations or on their own without leaving the scope of the present invention.

The invention is described in detail by means of an exemplary embodiment and with reference to the drawings. Like components are indicated by like reference numerals throughout the drawings.

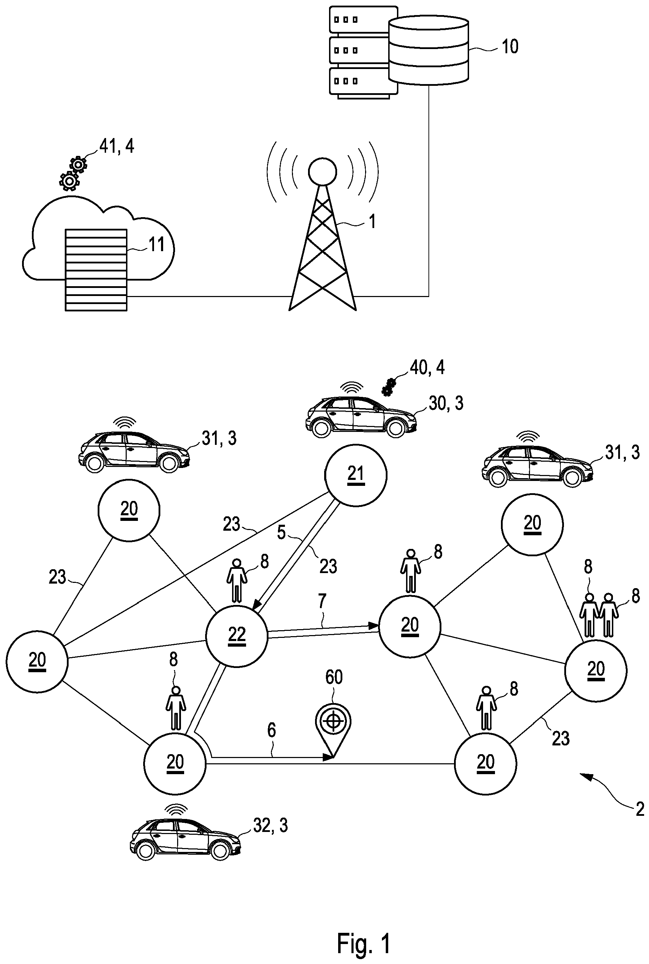

- Fig. 1: schematically shows an entity diagram of a cellular network according to an embodiment of the invention.

Fig. 1 schematically shows an entity diagram of a cellular network 1 according to an embodiment of the invention. The cellular network 1 covers a road network 2 and comprises a fleet control node 10. The fleet control node 10 is configured for carrying out a method according to an embodiment of the invention set forth below together with a distributed teleoperation application 4 and a vehicle 30 of a fleet of vehicles 3.

The fleet control node 10 may be implemented by a computer program product comprising a digital storage medium storing a program code. The program code causes a computing device to carry out the following method as the fleet control node 10 together with the distributed teleoperation application 4 and the vehicle 30 of the fleet of vehicles 3 when being executed by a processor of the computing device.

The fleet of vehicles 3 is operated as follows.

The vehicle 30 may execute a frontend 40 of the distributed teleoperation application 4. An edge cloud server 11 may execute a backend 41 of the distributed teleoperation application 4. The cellular network 1 preferably provides the fleet control node 10 as a permanent service.

The vehicle 30 of the fleet of vehicles 3 to be randomly accessed and operated on the road network 2 by a plurality of customers 8 is located at a first waiting point 21 of the road network 2. The road network 2 comprises a plurality of waiting points 20, 21, 22 for the vehicle 30 and a plurality of roads 23. Each road 23 connects exactly two waiting points 20, 21, 22 of the road network 2.

The distributed teleoperation application 4 connects to the vehicle 30 via a wireless connection and remotely operates the vehicle 30 to move within the road network 2 on a determined route 5 from the first waiting point 21 to a determined second waiting point 22. The wireless connection has a low latency and a low jitter and is provided by the cellular network 1 covering the road network 2.

A base transceiver station of the cellular network 1 may provide the wireless connection with the low latency and the low jitter by prioritizing data packets transmitted by the distributed teleoperation application 4 or by marking data packets transmitted by the distributed teleoperation application 4, the marked data packets causing the distributed teleoperation application 4 to adapt a data rate of the transmitted data packets.

The fleet control node 10 may determine a moving priority for the vehicle 30 dependent on a difference between a current distribution of the vehicles 30, 31, 32 at the waiting points 20, 21, 22, the current distribution comprising the vehicle 30 located at the first waiting point 21, and a target distribution of the vehicles 30, 31, 32 at the waiting points 20, 21, 22, the target distribution comprising the vehicle 30 located at the second waiting point 22, and remotely operate the vehicle 30 corresponding to the determined moving priority.

Furthermore, the fleet control node 10 may determine the route 5 from the first waiting point 21 to the determined second waiting point 22 dependent on a current bitrate and/or a current coverage provided by the cellular network 1 along the determined route 5. The vehicle 30 may be remotely operated to move along the determined route 5.

The fleet control node 10 of the cellular network 1 determines the second waiting point 22 dependent on a distance of the vehicle 30 from neighboring vehicles 31 of the fleet of vehicles 3, a predicted distribution of the customers 8 over the road network 2 and a predicted bitrate and/or coverage of the cellular network 1 at the determined second waiting point 22.

Determining the second waiting point 22 preferably comprises annealing a cost function. A function comprising a mathematical graph corresponding to the road network 2, the nodes of the mathematical graph being the waiting points 20, 21, 22 of the road network 2 and the edges of the graph being the roads 23 of the road network 2 connecting the waiting points 20, 21, 22, a negative term linearly dependent on the distance and a positive term inversely dependent on the distance, a positive term having an inverse power of the bitrate and/or a positive term having an inverse power of the coverage and/or a negative term modeling the predicted distribution of the customers 8 within the road network 2 as a Gaussian distribution may be annealed as the cost function.

The distributed teleoperation application 4 may operate each vehicle 30, 31, 32 of the fleet of vehicles 3. Accordingly, the fleet control node 10 may determine a second waiting point 22 for each vehicle 30, 31, 32.

Apart from that, the fleet control node 10 may determine a route 6 of the vehicle 30 from the determined second waiting point 22 to a destination 60 determined by a customer 8 using the vehicle 30 and transmits the determined route to the vehicle 30.

The fleet control node 10 may also determine a route 7 of the vehicle 30 from the determined second waiting point 22 to a customer 8 located within the road network 2 and having ordered the vehicle 30. The distributed teleoperation application 4 may remotely operate the vehicle 30 to move from the determined second waiting point 22 to the customer 8.

### Reference Numerals

- 1: cellular network
- 10: fleet control node
- 11: edge cloud server
- 2: road network
- 20: waiting point
- 21: first waiting point
- 22: second waiting point
- 23: road
- 3: fleet of vehicles
- 30: vehicle
- 31: neighboring vehicle
- 32: further vehicle
- 4: distributed teleoperation application
- 40: frontend
- 41: backend
- 5: route
- 6: route
- 60: destination
- 7: route
- 8: customer

## Claims

1. A method for operating a fleet of vehicles (3), wherein
- a vehicle (30) of a fleet of vehicles (3) to be randomly accessed and operated on a road network (2) by a plurality of customers (8) is located at a first waiting point (21) of the road network (2), the road network (2) comprising a plurality of waiting points (20, 21, 22) for the vehicle (30) and a plurality of roads (23) each road (23) connecting exactly two waiting points (20, 21, 22) of the road network (2);
- a distributed teleoperation application (4) connects to the vehicle (30) via a wireless connection and remotely operates the vehicle (30) to move within the road network (2) on a determined route (5) from the first waiting point (21) to a determined second waiting point (22), the wireless connection having a low latency and a low jitter and being provided by a cellular network (1) covering the road network (2);
- a fleet control node (10) of the cellular network (1) determines the second waiting point (22) dependent on a distance of the vehicle (30) from neighboring vehicles (31) of the fleet of vehicles (3), a predicted distribution of the customers (8) over the road network (2) and a predicted bitrate and/or coverage of the cellular network (1) at the determined second waiting point (22).

2. The method according to claim 1, wherein the fleet control node (10) determines a moving priority for the vehicle (30) dependent on a difference between a current distribution of the vehicles (30, 31, 32) at the waiting points (20, 21, 22), the current distribution comprising the vehicle (30) located at the first waiting point (21), and a target distribution of the vehicles (30, 31, 32) at the waiting points (20, 21, 22), the target distribution comprising the vehicle (30) located at the second waiting point (22), and remotely operates the vehicle (30) corresponding to the determined moving priority.

3. The method according to claim 1 or 2, wherein the fleet control node (10) determines the route (5) from the first waiting point (21) to the determined second waiting point (22) dependent on a current bitrate and/or a current coverage provided by the cellular network (1) along the determined route (5), and the vehicle (30) is remotely operated to move along the determined route (5).

4. The method according to one of claims 1 to 3, wherein the vehicle (30) executes a frontend (40) of the distributed teleoperation application (4) and an edge cloud server executes a backend (41) of the distributed teleoperation application (4) and/or a base transceiver station of the cellular network (1) provides the wireless connection with the low latency and the low jitter by prioritizing data packets transmitted by the distributed teleoperation application (4) or by marking data packets transmitted by the distributed teleoperation application (4), the marked data packets causing the distributed teleoperation application (4) to adapt a data rate of the transmitted data packets.

5. The method according to one of claims 1 to 4, wherein determining the second waiting point (22) comprises annealing a cost function.

6. The method according to claim 5, wherein a function comprising a negative term linearly dependent on the distance and a positive term inversely dependent on the distance is annealed as the cost function.

7. The method according to claim 6, wherein the function comprising a positive term having an inverse power of the bitrate and/or a positive term having an inverse power of the coverage is annealed as the cost function.

8. The method according to claim 6 or 7, wherein the function comprising a negative term modeling the predicted distribution of the customers (8) within the road network (2) as a Gaussian distribution is annealed as the cost function.

9. The method according to one of claims 5 to 8, wherein the function comprises a mathematical graph corresponding to the road network (2), the nodes of the mathematical graph being the waiting points (20, 21, 22) of the road network (2) and the edges of the graph being the roads (23) of the road network (2) connecting the waiting points (20, 21, 22).

10. The method according to one of claims 1 to 9, wherein the distributed teleoperation application (4) operates each vehicle (30, 31, 32) of the fleet of vehicles (3) and the fleet control node (10) determines a second waiting point (22) for each vehicle (30, 31, 32).

11. The method according to one of claims 1 to 10, wherein the fleet control node (10) determines a route (6) of the vehicle (30) from the determined second waiting point (22) to a destination (60) determined by a customer (8) using the vehicle (30) and transmits the determined route to the vehicle (30).

12. The method according to one of claims 1 to 11, wherein the fleet control node (10) determines a route (7) of the vehicle (30) from the determined second waiting point (22) to a customer (8) located within the road network (2) and having ordered the vehicle (30) and the distributed teleoperation application (4) remotely operates the vehicle (30) to move from the determined second waiting point (22) to the customer (8).

13. The method according to one of claims 1 to 12, wherein the cellular network (1) provides the fleet control node (10) as a permanent service.

14. A cellular network (1), comprising a fleet control node (10) for a cellular network, the fleet control node (10) being configured for carrying out a method according to one of claims 1 to 13 together with a distributed teleoperation application (4) and a vehicle (30) of a fleet of vehicles (3).

15. A computer program product, comprising a digital storage medium storing a program code, the program code causing a computing device to carry out a method according to one of claims 1 to 13 as the fleet control node (10) together with a distributed teleoperation application (4) and a vehicle (30) of a fleet of vehicles (3) when being executed by a processor of the computing device.
